# EUROPEAN PATENT APPLICATION

(11) **EP 1 380 490 A2**
(43) Date of publication of application: **14.01.2004**
(21) Application number: 03015802.6
(22) Date of filing: 10.07.2003
(51) Int. Cl.: B62D 5/04

(54) **Vehicle operation control method and vehicle operation control apparatus**

(30) Priority: 12.07.2002 JP 2002203420
(71) Applicant: Toyoda Koki Kabushiki Kaisha, Kariya-shi, Aichi-ken, 448-8652 (JP)
(72) Inventor: Momiyama, Minekazu, Kariya-shi, Aichi-ken 448-8652 (JP); Takeuchi, Shinji, Kariya-shi, Aichi-ken 448-8652 (JP); Imoto, Yuzo, Kariya-shi, Aichi-ken 448-8650 (JP); Yasui, Yoshiyuki, Kariya-shi, Aichi-ken 448-8650 (JP); Tanaka, Wataru, Kariya-shi, Aichi-ken 448-8650 (JP); Muragishi, Yuji, za Nagakute, Aichi-ken 480-1192 (JP)
(74) Representative: Böckelen, Rainer

(57) **Abstract**

This invention provides a vehicle operation control method and vehicle operation control apparatus which protects a vehicle driver from a feeling of disharmony in his steering operation. Provided is a vehicle operation control method for controlling an actual steering angle of driven wheels based on a steering angle of a steering wheel and a vehicle velocity, with
a first step of obtaining a change amount in the steering angle by the steering wheel;
a second step of controlling a variable gain based on the vehicle velocity;
a third step of multiplying the change amount in the steering angle obtained in the first step with the variable gain controlled in the second step;
a fourth step of integrating results of multiplications in the third step; and
a fifth step of controlling the actual steering angle of the steering wheel based on a result of the integration in the fourth step.

## Description

### BACKGOUND OF THE INVENTION

### 1. Field of the Invention

The present invention relates to a vehicle operation control method and vehicle operation control apparatus for controlling an actual steering angle of a driven wheel based on a steering angle of a steering wheel and vehicle velocity.

### 2. Description of Related Art

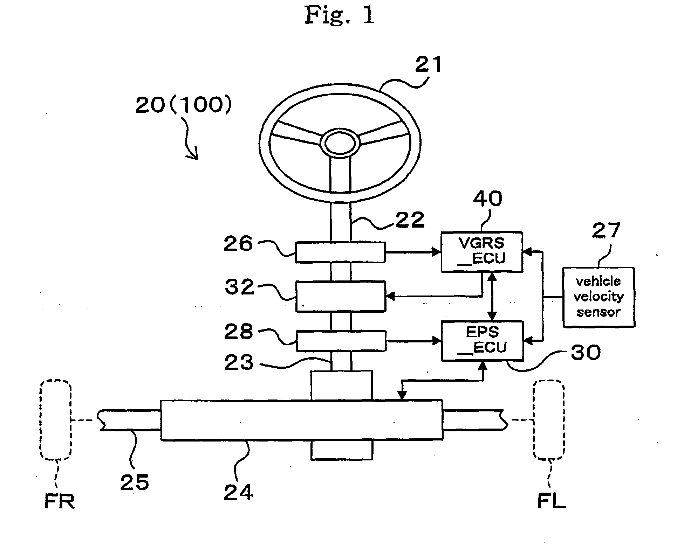

As a vehicle operation control apparatus including a transmission ratio changing mechanism for changing the transmission ratio by driving a motor, provided halfway of a steering transmission system which connects a steering wheel to driven wheels, a vehicle operation control apparatus 100 which comprises a steering wheel 21, a first steering shaft 22, a second steering shaft 23, an EPS actuator 24. a rod 25, a steering angle sensor 26, a vehicle velocity sensor 27, a torque sensor 28, an EPS ECU 30, a gear ratio changing mechanism 32 (transmission ratio changing mechanism), a VGRS ECU 40 and the like, as shown in Fig. 1, is available. In the meantime, such "a transmission ratio changing mechanism for changing a transmission ratio by driving an electric motor, located halfway of a steering transmission system which connects the steering wheel to the driven wheels" is sometimes called variable gear ratio system (referred to as VGRS, hereinafter) depending on a case.

That is, an end of the first steering shaft 22 is connected to the steering wheel 21 and an input side of the gear ratio changing mechanism 32 is connected to the other end side of this first steering shaft 22. This gear ratio changing mechanism 32 comprises a motor, a reduction gear and the like. An end side of the second steering shaft 23 is connected to this output side of the gear ratio changing mechanism and an input side of the EPS actuator 24 is connected to the other end side of the second steering shaft 23. The EPS actuator 24 is an electric type powered steering system, which is capable of converting a rotary motion inputted by the second steering shaft 23 through a rack and pinion gear (not shown) to a motion in the axial direction of the rod 25 and outputting it. Further, this EPS actuator 24 generates an assist force depending on a steering condition by means of an assist motor which is controlled by the EPS ECU 30 so as to assist steering by a driver. In the meantime, this rod 25 is mounted on driven wheels FR, FL.

A rotation angle (steering angle) of the first steering shaft 22 is detected by a steering angle sensor 26 and inputted to the VGRS ECU 40 as a steering angle signal. A steering torque by the second steering shaft 23 is detected by a torque sensor 28 and inputted to the EPS ECU 30 as a torque signal. Further, a vehicle velocity is detected by a vehicle velocity sensor 27 and inputted to the EPS ECU 30 and VGRS ECU 40 as a vehicle velocity signal. Additionally, the EPS actuator 24 contains a tire angle sensor (not shown) capable of detecting a tire angle (actual steering angle) from a moving amount of the rod 25.

With such a structure, ratio between input gear and output gear is changed depending on vehicle velocity at real time by means of a motor and reduction gear in the gear ratio changing mechanism 32 and VGRS ECU 40 so as to change a ratio of output angle of the second steering shaft 23 relative to the steering angle of the first steering shaft 22. The EPS actuator 24 and the EPS ECU 30 generate an assist force for assisting steering of the vehicle driver by means of an assist motor depending on vehicle driver's steering condition and vehicle velocity detected by means of the torque sensor 28 and the vehicle velocity sensor 27.

Consequently, the steering gear ratio corresponding to the vehicle velocity can be set. For example, an output angle to a second steering shaft 23 by the gear ratio changing mechanism 32 can be set to be increased with respect to the steering angle of the steering wheel at the time of vehicle stop or traveling at a low velocity. Further, the output angle of the gear ratio changing mechanism 32 can be set to be decreased with respect to the steering angle of the steering wheel at the time of traveling at a high velocity. Meanwhile, an appropriate assist force corresponding to the vehicle velocity can be generated by means of an assist motor.

For example, if a vehicle is stopped or traveling at a low velocity, the steering gear ratio by the gear ratio changing mechanism 32 is set low and an assist force is intensified by an assist motor, so that the driven wheels can be steered largely even with a light steering operation. This facilitates the steering operation of a vehicle driver. On the other hand, if the vehicle is traveling at a high velocity, the assist force by the assist motor drops and the steering ratio by the gear ratio changing mechanism 32 is set high. Consequently, the steering operation becomes heavy and even if the steering wheel 21 is turned largely, it comes that the driven wheels are steered a little. Consequently, it can be expected that vehicle control stability is further improved.

However, such a vehicle operation control apparatus 100 changes the steering gear ratio corresponding to the vehicle velocity as described above. Thus, if the vehicle is accelerated or decelerated suddenly when the vehicle is swirling with the steering wheel maintained at a specific steering angle, the steering gear ratio is changed corresponding thereto. That is, under-steer or over-steer sometimes occurs although the steering wheel is maintained at a specific angle by the vehicle driver, thereby possibly providing the vehicle driver with a feeling of disharmony.

### SUMMARY OF THE INVENTION

The present invention has been accomplished to solve the above-described problem and therefore, an object of the present invention is to provide a vehicle operation control method and vehicle operation control apparatus which protects a vehicle driver from a feeling of disharmony in his steering operation.

In order to achive the above object, according to the present invention, a vehicle operation control method for controlling an actual steering angle of driven wheels based on
a steering angle of a steering wheel and a vehicle velocity, comprising:
a first step of obtaining a change amount in the steering angle by the steering wheel;
a second step of controlling a variable gain based on the vehicle velocity;
a third step of multiplying the change amount in the steering angle obtained in the first step with the variable gain controlled in the second step;
a fourth step of integrating results of multiplications in the third step; and
a fifth step of controlling the actual steering angle of the steering wheel based on a result of the integration in the fourth step.

Further, in order to achive the above object, according to the present invention, a vehicle operation control apparatus for controlling an actual steering angle of driven wheels based on a steering angle of a steering wheel and a vehicle velocity, comprising:
a steering angle change amount obtaining means for obtaining a change amount in the steering angle by the steering wheel; a variable gain control means for controlling a variable gain based on the vehicle velocity;
a multiplying means for multiplying the change amount in the steering angle obtained by the steering angle change amount obtaining means with the variable gain controlled by the variable gain control means;
an integrating means for integrating results of multiplications by the multiplying means; and
an actual angle controlling means for controlling the actual steering angle of the driven wheels based on a result of the integration by the integrating means.

According to the present invention, the variable gain controlled based on a vehicle velocity is multiplied with a change amount in the steering angle, the multiplication results are integrated and then, an actual steering angle of driven wheels is controlled based on the integration result. Consequently, because if the steering angle by the steering wheel changes, a change amount in the steering angle is generated corresponding to that change, the change amount is multiplied with the variable gain controlled based on the vehicle velocity. The actual steering angle of the driven wheel is controlled based on the integration result integrated the multiplication results. That is, the actual steering angle of the driven wheel can be controlled based on the steering angle and the vehicle velocity. On the other hand, because the change amount in the steering angle becomes zero when the steering wheel is maintained at a specific angle, a result of multiplication with the variable gain also becomes zero. Further, because a result of integration of the multiplication results does not change when the steering wheel is maintained at a specific angle, no changes occur in the actual steering angle of the driven wheels controlled based on the integration result. Therefore. because when the steering wheel is maintained at a specific angle, the actual steering angle of the driven wheels is not affected even if the vehicle velocity changes, over-steer characteristic and under-steer characteristic due to a sudden change in the vehicle velocity can be improved, thereby protecting the vehicle driver from a feeling of disharmony in this steering operation.

Further, in accordance with the more preferred teaching of the present invention, a transmission ratio changing machanism for changing a transmission ratio by a drive of a motor is provided halfway of a steering transmission system connecting the steering wheel with the driven wheels,
the variable gain controlled in the second step being a transmission ratio attained by the transmission ratio changing mechanism.

Still further, in accordance with the more preferred teaching of the present invention, a transmission ratio changing mechanism for changing a transmission ratio by a drive of a motor is provided halfway of a steering transmission system connecting the steering wheel with the driven wheels,
the variable gain controlled by the variable gain control means being a transmission ratio attained by the transmission ratio changing mechanism.

In accordance with the more preferred teaching of the present invention, a transmission ratio changing mechanism for changing the transmission ratio by a drive of a motor is provided halfway of steering transmission system which connects the steering wheel with the driven wheels, the transmission ratio is controlled based on the vehicle velocity, and this transmission ratio is multiplied with the change amount in the steering angle. Further, the multiplication results are integrated and the actual steering angle of the driven wheel is controlled based on the integration result. Consequently, because if the steering angle by the steering wheel changes, a change amount in the steering angle is generated corresponding to that change, the change amount is multiplied with the transmission ratio of the transmission ratio changing mechanism controlled based on the vehicle velocity. The actual steering angle of the driven wheel is controlled based on the integration result integrated the multiplication results. That is, the actual steering angle of the driven wheel can be controlled based on the steering angle and the vehicle velocity. On the other hand, because the change amount in the steering angle becomes zero when the steering wheel is maintained at a specific angle, a result of multiplication with the transmission ratio of the transmission ratio changing mechanism also becomes zero. Further, because a result of integration of the multiplication results does not change when the steering wheel is maintained at a specific angle, no changes occur in the actual steering angle of the driven wheels controlled based on the integration result. Therefore, because when the steering wheel is maintained at a specific angle, the actual steering angle of the driven wheels is not affected even if the vehicle velocity changes, over-steer characteristic and under-steer characteristic due to a sudden change in the vehicle velocity can be improved, thereby protecting the vehicle driver from a feeling of disharmony in this steering operation.

In order to achive the above object, according to the present invention, a vehicle operation control method for controlling an actual steering angle of driven wheels based on a steering angle of a steering wheel and a vehicle velocity, wherein
if information that the steering wheel is not being turned or information that the steering wheel is being turned without affecting the steering of the driven wheels is obtained based on the change amount in the steering angle by the steering wheel, changes in the actual steering angle of the driven wheels is restricted.

Further, in order to achive the above object, according to the present invention, a vehicle operation control apparatus for controlling an actual steering angle of driven wheels based on a steering angle of a steering wheel and a vehicle velocity, further comprising a control means which if information that the steering wheel is not being turned or information that the steering wheel is being turned without affecting the steering of the driven wheels is obtained based on the change amount in the steering angle by the steering wheel, restricts changes in the actual steering angle of the driven wheels.

According to the present invention, if information that the steering wheel is not being turned or information that the steering wheel is being turned without affecting the steering of the driven wheels is obtained based on the change amount in the steering angle by the steering wheel, changes in the actual steering angle of the driven wheels is restricted. Thus, even if when the vehicle driver maintains the steering wheel at a specific angle, the actual steering angle of the driven wheels is controlled based on the steering angle by the steering wheel and the vehicle velocity, changes in the actual steering angle of the driven wheels is restricted. Consequently, even if the vehicle velocity changes when the steering wheel is maintained at a specific angle, the actual steering angle of the driven wheels is not affected. Therefore, over-steer characteristic and under-steer characteristic due to a sudden change in the vehicle velocity can be improved, thereby protecting the vehicle driver from a feeling of disharmony. In the meantime, those informations may be obtained based on the steering angle velocity instead of the change amount in the steering angle by the steering wheel and in this case, the same operation and effect are produced.

### BRIEF DESCRIPTION OF DRAWINGS

Fig. 1 is an explanatory diagram showing an outline of the structure of a vehicle operation control apparatus;
Fig. 2 is a functional block diagram showing vehicle operation control processing by means of the EPS ECU and VGRS ECU of the vehicle operation control apparatus of this embodiment;
Fig. 3 is a functional block diagram showing a basic functional configuration of the vehicle operation control processing applied to the VGRS control processing of this embodiment;
Fig. 4 is a functional block diagram showing a specific functional configuration of the vehicle operation control processing applied to the VGRS control processing of this embodiment; and
Fig. 5 is a flow chart showing a flow of the vehicle operation control processing of this embodiment.

### DESCRIPTION OF THE PREFERRED EMBODIMENTS

Hereinafter, the embodiment of the vehicle operation control apparatus which the vehicle operation control method and vehicle operation control apparatus of the present invention are applied to will be described with reference to the accompanying drawings. Meanwhile, because the vehicle operation control apparatus 20 of this embodiment is not different from the vehicle operation control apparatus 100 in terms of mechanical structure, the vehicle operation control apparatus 20 (100) shown in Fig. 1 will be described.

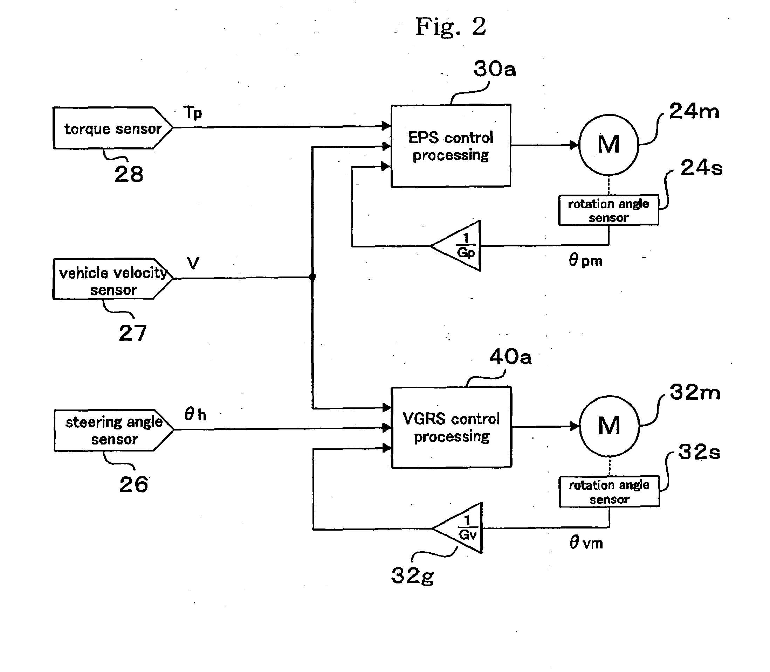

As shown in Fig. 1, a vehicle operation control apparatus 20 comprises a steering wheel 21, a first steering shaft 22, a second steering shaft 23, an EPS actuator 24, a rod 25, a steering angle sensor 26, a vehicle velocity sensor 27, a torque sensor 28, an EPS ECU 30, a gear ratio changing mechanism 32, a VGRS ECU 40 and the like. Because its mechanical and electrical connections have been already described, description thereof is omitted here. Fig. 2 shows a functional block diagram showing vehicle operation control processing by means of the EPS ECU 30 and VGRS ECU 40 of the vehicle operation control apparatus 20 of this embodiment.

As shown, in Fig. 2, in the vehicle operation control apparatus 20 of this embodiment, two processings, that is, an EPS control processing 30a by the EPS ECU 30 and VGRS control processing 40a by the VGRS ECU 40 are carried out by an electronic control unit (ECU). That is, the vehicle operation control apparatus 20 has a function for controlling the steering gear ratio by means of the gear ratio changing mechanism 32 according to VGRS control processing 40a with the VGRS ECU 40, depending on the vehicle velocity. Further, it has a function of assisting steering by the vehicle driver by generating an assist force depending on steering condition by means of the EPS control processing 30a with the EPS ECU 30.

Thus, in the VGRS control processing 40a, a rotation angle instruction value of the motor 32m of the gear ratio changing mechanism 32, which is automatically determined corresponding to the vehicle velocity, is determined from a motor rotation angle map (not shown) when the steering angle signal by the steering angle sensor 26 and the vehicle velocity signal by the vehicle velocity sensor 27 are inputted to the VGRS ECU 40. Then, a motor voltage corresponding to the determined rotation angle instruction value is supplied to the motor 32m through a motor drive circuit. Consequently, the gear ratio changing mechanism 32 and the VGRS ECU 40 change a ratio of an output gear to an input gear by means of the motor 32m and the reduction gear 32g corresponding to the vehicle velocity at real time, so that a ratio Gv of an output angle of the second steering shaft 23 to a steering angle of the first steering shaft 22 is changed.

In the EPS control processing 30a, if a steering torque signal by the torque sensor 28 and a vehicle velocity signal by the vehicle velocity sensor 27 are inputted to the EPS ECU 30, a current instruction value of the assist motor 24m of the EPS actuator 24, which is automatically determined depending upon the vehicle velocity, is determined from a motor current map (not shown). A motor voltage corresponding to the determined current instruction value is supplied to the motor 24m by the motor drive circuit. Consequently, the EPS actuator 24 and the EPS ECU 30 generate an assist force for assisting steering of a vehicle driver by means of the assist motor 24m, corresponding to the steering condition by the vehicle driver and vehicle velocity detected by the torque sensor 28 and the vehicle velocity sensor 27 through the EPS control processing 30a.

The VGRS ECU 40 carries out the VGRS control processing 40a based on a steering angle signal transmitted from the steering angle sensor 26, so that a steering gear ratio is changed corresponding to the vehicle velocity. Thus, as described in the Description of Related Art, if a vehicle is accelerated or decelerated suddenly when it swirls with a specific steering angle maintained with the steering wheel 21, the steering gear ratio can be changed corresponding thereto.

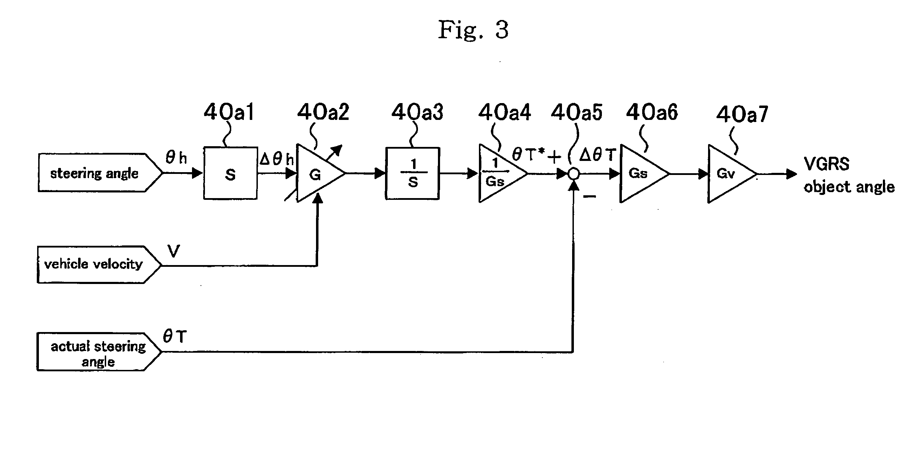

Thus, in the vehicle operation control apparatus 20 of this embodiment, even if the vehicle velocity is changed with the steering wheel 21 maintained at a specific angle when the vehicle operation control processing, which is a basic functional block shown in Fig. 3, is executed by the VGRS ECU 40, an actual steering angle θT of the driven wheels FR, FL is never affected.

Here, the vehicle operation control processing shown in Fig. 3 will be described.
As shown in Fig. 3, the vehicle operation control processing by the VGRS ECU 40 is constituted of a steering angle change amount detecting means 40a1, a variable gain multiplying means 40a2, an integrating means 40a3 , an object actual steering angle computing means 40a4, a deflection amount detecting means 40a5, an object steering angle computing means 40a6, and a VGRS object angle computing means 40a7.

In the vehicle operation control processing, a change amount Δθh (differential value) of the steering angle θh by the steering wheel 21 is detected by the steering angle change amount detecting means 40a1, the variable gain G is controlled by the variable gain multiplying means 4042 based on the vehicle velocity V by vehicle velocity sensor 27 and that controlled variable gain G is multiplied with the change amount Δθh in the steering angle. Then, the multiplication result is integrated by the integrating means 40a3 and further, that integration result (integrated value) is converted to the object actual steering angle θT* by the object actual steering angle computing means 40a4. The deflection amount detecting means 40a5 obtains a deflection between an actual steering angle θT by a tire angle sensor (not shown) obtained through the EPS ECU 30 and an object actual steering angle produced by conversion by the object actual steering angle computing means 40a4 so as to compute an angle deflection ΔθT.

After such a computation, the angle deflection ΔθT is converted to an object steering angle by the object steering angle computing means 40a6 and further, converted to a VGRS object angle by the VGRS object angle computing means 40a7 so as to obtain the VGRS object angle which is outputted to the gear ratio changing mechanism 32 based on this object steering angle. In the meantime, the Gs shown in Fig. 3 indicates steering gear ratio, which is a ratio between the steering angleθh and the actual steering angle θT and Gv indicates a gear ratio of the reduction gear 32g, which is accommodated in the gear ratio changing mechanism 32.

If the steering angle θh by the steering wheel 21 is changed in the vehicle operation control processing, an amount corresponding to that change is generated as the change amount Δθh (differential value) of the steering angle θh. Thus, the variable gain G controlled based on the vehicle velocity V is multiplied with that change amount Δ θh and this multiplication result is integrated, and the actual steering angleθT of the driven wheels FR, FL is controlled based on this integration result (integrated value).

Because when the steering wheel 21 is maintained at a specific angle, the change amount Δθh of the steering angle θh becomes zero and therefore, a multiplication result of the variable gain G also becomes zero. Because the integration result of this multiplication result is not changed when the steering wheel 21 is maintained at a specific angle, the actual steering angle of the driven wheels FR, FL controlled based on the integration result is not changed. Therefore, even if the vehicle velocity V changes with the steering wheel 21 maintained at a specific angle, the actual steering angle θT of the driven wheels FR, FL is never affected. Thus, over-steer characteristic and under-steer characteristic by a sudden change in vehicle velocity can be adjusted to be preferable.

Even while the vehicle driver maintains the steering wheel 21 at a specific angle, a rotation in the steering wheel 21, which does not affect steering of the driven wheels, that is, "a play in the steering wheel 21" may occur due to backlash or the like generated in gears constituting the gear ratio changing mechanism 32 or a steering transmission mechanism among the steering wheel 21, the first steering shaft 22 and the gear ratio changing mechanism 32. Because the change amount in the steering angle θh due to the "a play in the steering wheel 21" does not affect the steering, that change amount Δθh is adjusted to zero by removing it by non-sensitive range processing or filter processing, which will be described later.

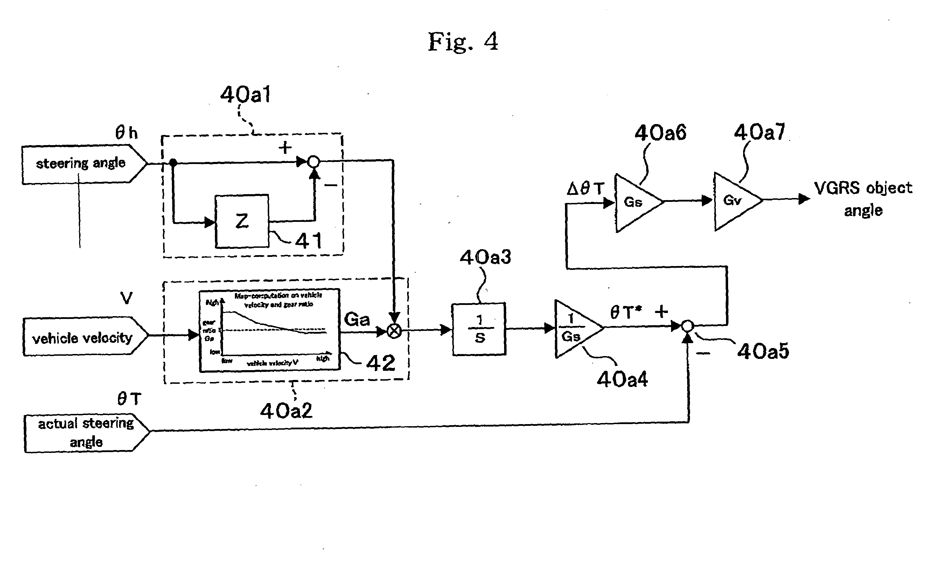

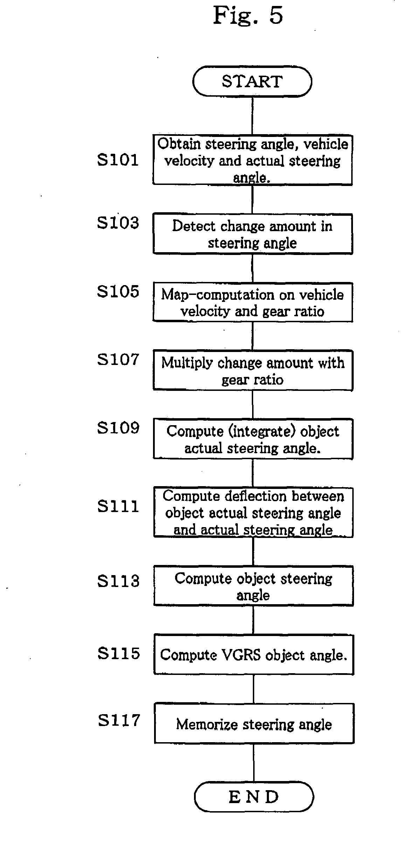

Next, a configuration example in which the basic functional block of the vehicle operation control processing shown in Fig. 3 is applied specifically to the VGRS control processing 40a and its processing flow will be described with reference to Fig. 4 and Fig. 5. In Fig.4 the same reference numerals are attached to substantially the same components as the respective functions shown in Fig. 3.

As shown in Fig. 5, the vehicle operation control processing is computed by the VGRS ECU 40 through the VGRS control processing 40a and respective processings of step S101-step S117 are executed successively. In the meantime, this vehicle operation control processing is carried out periodically and repeatedly by timer interruption or the like (for example, every 5 millisecond). Hereinafter, each step will be described with reference to Figs. 4, 5.

### (1) Step S101

In this step, a processing for obtaining the steering angle θh, the vehicle velocity V and the actual steering angle θT is carried out. The steering angle θh is obtained by receiving a steering angle signal detected by the steering angle sensor 26 from the steering angle sensor 26 or other ECU. The vehicle velocity V is obtained by receiving a vehicle velocity signal detected by the vehicle velocity sensor 27 from the vehicle velocity sensor 27 or the like. Further, the actual steering angle θT is obtained by receiving an actual steering angle signal detected by the tire angle sensor accommodated in the EPS actuator 24 through the EPS ECU 30.

### (2) Step S103

In this step, a processing of detecting the change amount Δθh in steering angle θh is carried out. That is, a steering angle Z detected previously and stored in the steering angle memory 41 is subtracted from the steering angleθh obtained in step S101 through arithmetic operating processing by the steering angle change amount detecting means 40a1 shown in Fig. 4 so as to obtain a deflection between the both. Because consequently, the change amount Δθh in steering angleθh, that is, a differential value of the steering angle θh is computed, the change amount Δθh in steering angle θh is detected. In the meantime, the steering angle memory 41 is constituted of, for example, a semiconductor storage unit of the VGRS ECU 40. Further, because the change amount (for example, +/- 3° ) in steering angle θh due to the "play in the steering wheel 21" (may correspond to "rotation of steering wheel not affecting steering of driven wheels") does not affect the steering of driven wheels, that change amount is removed through a processing for neglecting that change amount (non-sensitive range processing and filter processing). Consequently, the steering angle change amount detecting means 40a1 regards the change amount in the steering angle θh by the "play in the steering wheel 21" as zero and detects the change amount Δθh in steering angleθh which exceeds the "play in the steering wheel 21".

### (3) Step S105

In this step, a processing of map-operation between the vehicle velocity and gear ratio is carried out. That is, the variable gain multiplying means 40a2 shown in Fig. 4 determines a gear ratio Ga (transmission ratio by the transmission ratio changing mechanism) corresponding to the vehicle velocity V according to the vehicle velocity-gear ratio map 42, which automatically determines a transmission ratio by the gear ratio changing mechanism 32 based on the vehicle velocity V obtained in step S101. Meanwhile, the vehicle velocity-gear ratio map 42 is constituted of a data table stored by the semiconductor storage unit of the VGRS ECU 40, for example.

### (4) Step S107

In this step, a processing of multiplying the change amount Δθh in steering angle θh with a gear ratio Ga is carried out. That is, that change amount Δθh is multiplied with the gear ratio Ga through arithmetic operation processing by the variable gain multiplying means 40a2 shown in Fig. 4 and outputted to the integrating means 40a3 at anext stage. Because consequently, the gear ratio Ga is multiplied with only the change amount Δ θh in steering angle θh, no change occurs in the steering angle θh by the steering wheel 21 and unless no change amount Δθh occurs (Δθh = 0). a result of multiplication between the vehicle velocity and gear ratio becomes zero even if the gear ratio Ga corresponding to the vehicle velocity V is determined according to the vehicle velocity - gear ratio map 42 (Δθh x Ga = 0). Consequently, a value outputted to the integrating means 40a3 becomes zero. That is, if the vehicle velocity V changes with the steering wheel 21 maintained at a specific angle, zero is outputted to the integrating means 40a3. In the meantime, the case where "no change occurs in the steering angle θh of the steering wheel 21 so that the change amount Δθh is not generated (Δθh = 0)" may correspond to "information that the steering wheel is not being turned". Further, a multiplication result (Δθh x Ga = 0) obtained when the information that the steering wheel 21 is not being turned (Δ θh = 0) is obtained may correspond to the "restricting changes in the actual steering angle of the driven wheel".

### (5) Step S109

In this step, a processing of computing the object actual steering angle is carried out. That is, by integrating multiplication results by the integrating means 40a3 shown in FIG. 4 and then dividing that integration result by the steering gear ratio Gs by means of the object actual steering angle computing means 40a4, an object actual steering angle θT* corresponding to a change in the steering angle θh by the steering wheel 21 is obtained.

### (6) Step S111

In this step, a processing of computing a deflection between the object actual steering angle θT* and the actual steering angleθT is carried out. That is, by subtracting an actual angle θT obtained in step S101 from an object actual steering angle θT* by means of the deflection amount detecting means 40a5 shown in Fig. 4 through arithmetic operation, the deflection of the actual angle θT to the object actual steering angle θT*, that is, the angle deflection ΔθT, is obtained.

### (7) Step S113

In this step, a processing of computing an object steering angle is carried out. That is, by multiplying the steering gear ratio Gs with the angle deflection ΔθT obtained in step S111 by means of the object steering angle computing means 40a6 shown in Fig. 4 through arithmetic operation, the actual steering angle is converted to the steering angle, thereby obtaining the object steering angle.

### (8) Step S115

In this step, a processing of computing a VGRS object angle is carried out. That is, by multiplying the object steering angle obtained in step S113 with the gear ratio Gv of the reduction gear 32g in the gear ratio changing mechanism 32 by means of the VGRS object angle computing means 40a7 shown in FIG. 4 through arithmetic operation, the steering angle is converted to the VGRS object angle, thereby obtaining the VGRS object angle.

### (9) Step S117

In this step, a processing of memorizing the steering angle θh is carried out. That is, due to a necessity of referring to the steering angle θh obtained in step S101 as a steering angle Z detected last upon a next processing of step S103, a currently obtained steering angle θh is stored in the steering angle memory 41, so that the steering angle θh is memorized.

By executing a sequence of the vehicle operation control processing from step S101 to step S117, the vehicle operation control apparatus 20 detects a change amount Δ θh in the steering angle of the steering wheel 21 in step S103, controls the vehicle velocity - gear ratio map 42 (variable gain G) based on the vehicle velocity V in step S105, multiplies the change amount Δθh in the steering angle with a gear ratio (variable gain G) outputted according to the vehicle velocity - gear ratio map42 in step S107, integrates multiplication results in step S109, and controls the actual steering angle θT of the driven wheels FR, FL based on a result of integration in step S111. That is, a gear ratio (variable gain G) from the vehicle velocity - gear ratio map 42 controlled based on the vehicle velocity V is multiplied with the change amount Δθh in the steering angle, the multiplication results are integrated and the actual angle θT of the driven wheels FR, FL is controlled based on the integration result.

Because if the steering angle θh attained by the steering wheel 21 is changed, the change amount Δθh in the steering angle is generated corresponding to that change, the gear ratio (variable gain G) controlled based on the vehicle velocity V is multiplied with the change amount Δθh, so that the actual steering angle θT of the driven wheels FR, FL is controlled based on an integration result of the multiplication results. That is, the actual steering angle θT of the driven wheels FR, FL can be controlled based on the steering angle θh and the vehicle velocity V. On the other hand, when the steering wheel 21 is maintained at a specific angle, the change amount Δθh in the steering angle θh becomes zero and therefore, a result of multiplication of the variable gain G also becomes zero. Further, because the integration result of the multiplication results is never changed when the steering wheel 21 is maintained at a specific angle, no change occurs in the actual steering angle θT of the driven wheels FR, FL controlled based on the integration result. Therefore, even if the vehicle velocity V changes in the condition that the steering wheel 21 is maintained, the actual steering angle θT of the driven wheels FR, FL is never affected. Therefore, the over-steer characteristic and under-steer characteristic due to a sudden change in vehicle velocity can be controlled preferably, thereby protecting the vehicle driver from a feeling of disharmony.

Although in the above-described embodiment, the change amount Δθh in the steering angle θh is detected in step S103, for example, the step S103 may be a processing of obtaining steering angle velocity ωh obtained by time-differentiating the steering angle θh. In this case, the steering angle velocity ωh when the steering angle velocity ωh is zero may correspond to "information that the steering wheel is not being turned" and the steering angle velocity ωh when the steering angle velocity ωh is substantially zero may correspond to "information that the steering wheel 21 is being turned without affecting the steering operation of the driven wheels" (that is, a rotation within "a play in the steering wheel 21").

In this case, in step S107, a processing of multiplying the steering angle velocity ωh with the gear ratio Ga is carried out. If the steering angle velocity ωh attained by the steering wheel 21 is zero (ωh = 0; may correspond to "information that the steering wheel is not being turned") or if the steering angle velocity ωh is substantially zero (may correspond to information "the steering wheel is being turned without affecting the steering), even if the gear ratio Ga corresponding to the vehicle velocity V is determined according to the vehicle velocity-gear ratio map 42, multiplication result of both becomes zero or substantially zero (ωh x Ga = 0 or substantially 0; may correspond to "restricting changes in the actual steering angle of the steering wheel").

Further, because no change occurs in a result of integration in the object actual steering angle computing processing of step S109 when the steering wheel 21 is maintained, no change occurs in the actual steering angle θT of the driven wheels FR, FL controlled based on the integration result. Therefore, when the steering wheel 21 is maintained at a specific angle, the actual steering angle θT of the driven wheels FR, FL is not affected even if the vehicle velocity V changes. Therefore, the over-steer characteristic and the under-steer characteristic due to a sudden change in vehicle velocity can be improved through a processing of obtaining the steering angle velocity ωh by time-differentiating the steering angle θh in step S103, thereby protecting the vehicle driver from a feeling of disharmony.

Although the invention has been disclosed in the context of a certain preferred embodiments, it will be understood that the present invention extends beyond the specifically disclosed embodiments to other alternative embodiments of the invention. Thus, it is intended that the scope of the invention should not be limited by the disclosed embodiments but should be determined by reference to the claims that follow.

This invention provides a vehicle operation control method and vehicle operation control apparatus which protects a vehicle driver from a feeling of disharmony in his steering operation.

In vehicle operation control processing, a change amount Δθh in steering angle θh by a steering wheel is detected by means of a steering angle change amount detecting means 40a1, a variable gain G is controlled based on a vehicle velocity V by a variable gain multiplying means 40a2 and then, that controlled variable gain G is multiplied with the change amount Δθh in the steering angle. Then, that multiplication result is integrated by an integrating means 40a3 and the integration result is converted to an object actual steering angle by an object actual steering angle computing means 40a4. A deflection amount detecting means 40a5 obtains a deflection between the actual steering angle θT and the object actual steering angle θT* so as to compute an angle deflection ΔθT. Thus, when the steering wheel is maintained, the change amount Δθh in the steering angle θh becomes zero and a result of multiplication with the variable gain G also becomes zero, so that no changes occurs in a result of integration of the multiplication results. Therefore, no changes occur in the actual steering angle of the driven wheels, thereby protecting the vehicle driver from a feeling of disharmony in his steering operation.

## Claims

1. A vehicle operation control method for controlling an actual steering angle of driven wheels based on a steering angle of a steering wheel and a vehicle velocity, comprising:
a first step of obtaining a change amount in the steering angle by the steering wheel;
a second step of controlling a variable gain based on the vehicle velocity;
a third step of multiplying the change amount in the steering angle obtained in the first step with the variable gain controlled in the second step;
a fourth step of integrating results of multiplications in the third step; and
a fifth step of controlling the actual steering angle of the steering wheel based on a result of the integration in the fourth step.

2. The vehicle operation control method according to claim 1 in which a transmission ratio changing mechanism for changing a transmission ratio by a drive of a motor is provided halfway of a steering transmission system connecting the steering wheel with the driven wheels,
the variable gain controlled in the second step being a transmission ratio attained by the transmission ratio changing mechanism.

3. A vehicle operation control apparatus for controlling an actual steering angle of driven wheels based on a steering angle of a steering wheel and a vehicle velocity, comprising:
a steering angle change amount obtaining means for obtaining a change amount in the steering angle by the steering wheel;
a variable gain control means for controlling a variable gain based on the vehicle velocity;
a multiplying means for multiplying the change amount in the steering angle obtained by the steering angle change amount obtaining means with the variable gain controlled by the variable gain control means;
an integrating means for integrating results of multiplications by the multiplying means; and
an actual angle controlling means for controlling the actual steering angle of the driven wheels based on a result of the integration by the integrating means.

4. The vehicle operation control apparatus according to claim 3 in which a transmission ratio changing mechanism for changing a transmission ratio by a drive of a motor is provided halfway of a steering transmission system connecting the steering wheel with the driven wheels,
the variable gain controlled by the variable gain control means being a transmission ratio attained by the transmission ratio changing mechanism.

5. A vehicle operation control method for controlling an actual steering angle of driven wheels based on a steering angle of a steering wheel and a vehicle velocity, wherein
if information that the steering wheel is not being turned or information that the steering wheel is being turned without affecting the steering of the driven wheels is obtained based on the change amount in the steering angle by the steering wheel, changes in the actual steering angle of the driven wheels is restricted.

6. A vehicle operation control apparatus for controlling an actual steering angle of driven wheels based on a steering angle of a steering wheel and a vehicle velocity, further comprising a control means which if information that the steering wheel is not being turned or information that the steering wheel is being turned without affecting the steering of the driven wheels is obtained based on the change amount in the steering angle by the steering wheel, restricts changes in the actual steering angle of the driven wheels.
